## Europäisches Patentamt

(19) **European Patent Office**

**Office européen des brevets**

(11) Veröffentlichungsnummer: **0 155 530**
**B1**

(12) **EUROPÄISCHE PATENTSCHRIFT**

(45) Veröffentlichungstag der Patentschrift:
27.04.88

(21) Anmeldenummer: 85101946.3

(22) Anmeldetag: 22.02.85

(51) Int. Cl.⁴: **F 16 D 66/02**

(54) Vorrichtung zur Signalisierung des Bremsbelagverschleisses einer hydraulisch betätigten Bremse für Kraftfahrzeuge.

(30) Priorität: 23.03.84 DE 3410739

(43) Veröffentlichungstag der Anmeldung:
25.09.85 Patentblatt 85/39

(45) Bekanntmachung des Hinweises auf die Patenterteilung:
27.04.88 Patentblatt 88/17

(84) Benannte Vertragsstaaten:
DE FR GB IT

(56) Entgegenhaltungen:
DE-A-2 329 245

(73) Patentinhaber: **VOLKSWAGEN AKTIENGESELLSCHAFT, D-3180 Wolfsburg (DE)**

(72) Erfinder: **Schulz, Waldemar, Ing.- grad.,
Gartenstrasse 9, D-3177 Sassenburg (DE)**
Erfinder: **Rupprecht, Kurt, Schubertstrasse 3,
D-3170 Gifhorn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zur Signalisierung des Bremsbelagverschleißes einer hydraulisch betätigten Bremse für Kraftfahrzeuge der im Oberbegriff des Patentanspruchs 1 genannten Art.

Eine derartige Vorrichtung ist beispielsweise aus der DE-A-2 329 245 bekannt. Dort sind am umlaufenden Bremsenteil, z. B. der Bremsscheibe, Nocken mit vorzugsweise parabolisch gekrümmten Auflaufflächen angeordnet, an denen - bei Überschreiten eines höchstzulässigen Belagverschleißes - am festen Bremsenteil, z. B. dem Tragkörper der Reibbacken angeordnete Vorsprünge (Gegenflächen) bei umlaufendem Rad hochgleiten, wodurch die Bremsbacken periodisch in axialer Richtung von der Bremsscheibe wegbewegt werden. Auf diese Weise wird eine periodische Änderung der Flächenpressung am Bremsbelag erzeugt, die ein rythmisches, von der Drehzahl der Bremsscheibe abhängiges Pulsieren des zur Betätigungeinrichtung der Bremse gehörenden Bremspedals bewirkt, wodurch dem Fahrzeuglenker ein Verschleiß des Bremsbelages signalisiert wird. Voraussetzung hierfür ist, daß die nockenförmigen Erhebungen sowie die Gegenflächen eine höhere Verschleißfestigkeit als die Bremsbeläge besitzen.

Obgleich sich diese bekannte Vorrichtung im serienmäßigen Einsatz grundsätzlich gut bewährt hat, kann nicht völlig ausgeschlossen werden, daß bei wenig ausgeprägter Sensibilität des Fahrzeuglenkers das Überschreiten des höchstzulässigen Belagverschleißes nicht sicher und nicht eindeutig genug signalisiert wird.

Der Erfindung liegt demzufolge die Aufgabezugrunde, eine Vorrichtung der im Oberbegriff des Patentanspruchs 1 genannten Art weiter zu verbessern und insbesondere so auszubilden, daß eine eindeutige Signalisierung des Überschreitens des höchstzulässigen Belagverschleißes sichergestellt ist.

Diese Aufgabe wird erfindungsgemäß durch die kennzeichnenden Merkmale des Patentanspruchs 1 gelöst. Vorteilhafte Ausgestaltungen und Weiterbildungen sind in den Unteransprüchen angegeben.

Erfindungsgemäß werden also die durch das Auflaufen der am umlaufenden Bremsenteil vorgesehenen nockenförmigen Erhebungen auf die ihnen zugeordneten Gegenflächen erzeugten periodischen Druckschwankungen in der zwischen dem Hauptbremszylinder und den Radbremszylindern anstehenden Bremsflüssigkeitssäule mittels an sich bekannter Drucksensoren erfaßt und mit Hilfe einer elektronischen Auswerteschaltung dem Fahrzeuglenker als optisches und/oder akustisches Warnsignal mitgeteilt.

Anhand eines in der Zeichnung dargestellten Ausführungsbeispieles wird die Erfindung nachstehend näher erläutert.

In der Zeichnung zeigen
Fig. 1    einen teilweisen Querschnitt durch eine Scheibenbremse und
Fig. 2    Einzelheiten der Scheibenbremse gemäß Fig. 1 in verschiedenen Ansichten.

In den Figuren ist der zu einer Scheibenbremse 10 gehörende Bremskörper 11 als mit Reibflächen 12 versehene, nur teilweise dargestellte Bremsscheibe ausgebildet. Beiderseits dieser Bremsscheibe 11 ist je eine Reibbacke 13 angeordnet, auf deren Tragkörper 14 aus Reibmaterial bestehende Bremsbeläge 15 befestigt sind, die bei Betätigung des Bremspedals 16' mittels im ortsfesten Bremssattel 17 angeordneten Kolben 10 hydraulisch axial gegen die Reibflächen 12 der Bremsscheibe 11 gedrückt werden. Der mittels des Bremspedals 16 betätigte Hauptbremszylinder ist hierbei mit 16 beziffert.

Im dargestellten Ausführungsbeispiel ist eine sogenannte Festsattelbremse mit zwei hydraulischen Kolben 18 dargestellt. Es kann sich jedoch genauso gut um eine sogenannte Schwimm- oder Faustsattelbremse handeln, bei der lediglich die eine Reibbacke unmittelbar durch einen Hydraulikkolben beaufschlagt wird, während der auf der anderen Bremsscheibenseite angeordnete Reibbacken über den axial verschiebbaren Schwimm- bzw. Faustsattel an der Bremsscheibe zur Anlage gebracht wird.

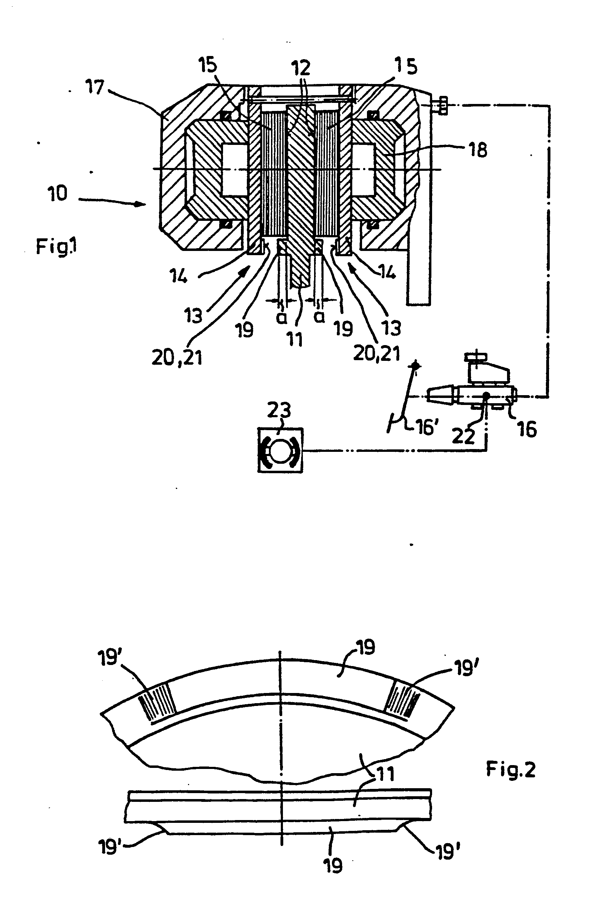

Im Ausführungsbeispiel sind die den Reibbacken 13 zugewandten Seiten der Bremsscheibe 11 mit je einem axial vorspringenden erhabenen Bereich 19 versehen, der sich radial unterhalb der Reibfläche 12 in Form einer nockenartigen Erhebung über eine gewisse Strecke in Umfangsrichtung der Bremsscheibe 11 erstreckt. Aus Figur 2, die - in Teilansicht - die Haupt und Draufsicht der Bremsscheibe 11 zeigt, ist dies gut zu erkennen. Mit Vorteil besitzen diese nockenartigen Erhebungen gekrümmte, z. B. parabolisch gekrümmte Auflaufflächen 19, so daß sie nicht abrupt axial vorspringen.

Radial in gleicher Höhe mit den Erhebungen 19 ist jeweils am unteren Rand des Tragkörpers 14 der Reibbacken 13 eine der Erhebung 19 zugeordnete, axial vorspringende Gegenfläche 20 vorgesehen, deren Verschleißfestigkeit höher als die des Reibmaterials des Bremsbelages 15 und vorzugsweise geringer als die des Materials der Erhebung 19 ist.

Sobald die Bremsbeläge 15 bis auf ein durch die Höhe der Erhebung bestimmtes Maß a abgenutzt sind, kommen die Erhebungen 19 mit den ihnen zugeordneten Gegenflächen 20 an den Tragkörpern 14 in Berührung, wodurch die Reibbacken 13 und die auf diese einwirkenden hydraulischen Kolben 18 während des Bremsvorganges, also bei sich drehender Bremsscheibe 11, periodisch axial leicht von der Bremsscheibe 11 fortbewegt werden, was - gleiche Stellung des Bremspedals 16'

Vorausgesetzt - entsprechende periodische Druckschwankungen im Hydraulikkreis zur Folge hat. Je öfter die Bremse 10 nunmehr weiterhin betätigt wird und die Bremsbeläge 15 sich dabei weiter abnutzen, umso intensiver treten die Druckschwankungen auf.

Innerhalb des Hydraulikkreises ist nunmehr ein Drucksensor 22 angeordnet, welcher der Höhe des erfaßten Drucks entsprechende elektrische Ausgangs signale liefert. Solche Drucksensoren sind bekannt und können beispielsweise aus Piezo-Quarzen bestehen. Im Ausführungsbeispiel ist der Drucksensor 22 unmittelbar am Hauptbremszylinder 16 angeordnet. Mit Vorteil kann er so ausgebildet sein, daß er ähnlich einem bekannten Bremslichtschalter in den Hauptbremszylinder eingeschraubt werden kann.

Die elektrischen Ausgangssignale des Drucksensors 22 werden einer elektronischen Auswerteschaltung 23 zugeführt, die derart ausgebildet ist, daß sie dann, wenn durch den Drucksensor 22 ein periodisch schwankender Druck erfaßt wird, ein optisches und/oder akustisches Warnsignal abgibt. Die gewünschte Funktionsweise der elektronischen Auswerteschaltung kann vom Fachmann unter Verwendung bekannter logischer elektronischer Bauelemente in einfacher Weise realisiert werden; Einzelheiten dieser Schaltung sind daher nicht weiter dargestellt. Vorzugsweise werden in der elektronischen Auswerteschaltung 23 hierbei Sieb- und/oder Filtermittel vorgesehen, um Einschwingund sonstige nichtperiodischen Störgrößen zu unterdrücken.

Die erfindungsgemäße Vorrichtung ermöglicht eine sehr zuverlässige und eindeutige Signalisierung des Bremsbelagverschleißes. Der hierfür benötigte bauliche und signaltechnische Aufwand ist gering, wobei von besonderem Vorteil ist, daß der Drucksensor und die von ihm zur elektronischen Auswerteschaltung führende elektrische Leitung vor Verschmutzung und mechanischer Beschädigung geschützt am Fahrzeugaufbau selbst untergebracht wird. Demgegenüber ist es bei bekannten Belagverschleiß-Signalisiervorrichtungen mit optischer/akustischer Anzeige im allgemeinen erforderlich, zu jedem einzelnen zu überwachenden Bremsbelag eine elektrische Leitung zu verlegen, die die Relativbewegungen zwischen Fahrzeugrädernund Fahrzeugaufbau überbrücken müssen.

## Patentansprüche

1. Vorrichtung zur Signalisierung des Bremsbelagverschleißes einer hydraulisch betätigten Bremse für Kraftfahrzeuge, bei der am umlaufenden (11) sowie am festen Bremsteil (14) angeordnete, im Vergleich zu den Bremsbelägen (15) verschleißfeste mechanische Erhebungen (19, 20) und diesen zugeordnete Gegenflächen bei Überschreiten des höchstzulässigen Belagverschleißes miteinander periodisch zur Anlage gelangen, wodurch im Hydraulikkreis ein von der Drehzahl des umlaufenden Bremsenteils (11) abhängiges rythmisches Pulsieren bewirkt wird, dadurch gekennzeichnet, daß innerhalb des Hydraulikkreises, insbesondere unmittelbar am Hauptbremszylinder (16) ein Drucksensor (22) angeordnet ist, dessen elektrische Ausgangssignale einer elektronischen Auswerteschaltung (23) zugeführt sind, welche bei Auftreten periodischer Druck-Schwankungen ein optisches und/oder akustisches Warnsignal abgibt.

2. Vorrichtung nach Anspruch 1, dadurch gekennzeichnet, daß der Drucksensor (22) ähnlich einem bekannten Bremalichtschalter in den Hauptbremszylinder (16) eingeschraubt ist.

3. Vorrichtung nach Anspruch 1 oder 2, dadurch gekennzeichnet, daß die elektronische Auswerteschaltung (23) Sieb- und/oder Filtermittel zur Unterdrückung von Einschwing und sonstigen nichtperiodischen Störgrößen enthält.

## Claims

1. A device for signalling brake lining wear in a hydraulically actuated brake for motor vehicles, in which projections (19, 20), which are disposed on the rotating brake part (11) and on the nonrotating brake part (14) respectively and which, in comparison with the brake linings (15) are relatively wear-resistant, come into periodic abutment with associated opposite faces when the maximum permissible lining wear is exceeded, which causes a rhythmic pulsation in the hydraulic circuit, which pulsation is dependent upon the rotational speed of the rotating brake part (11), characterised in that a pressure sensor (22) is disposed within the hydraulic circuit, particularly directly on the master brake cylinder (16), and its electrical output signals are fed to an electronic evaluation circuit (23), which delivers an optical and/or acoustic warning signal when periodic fluctuations in pressure occur.

2. A device as claimed in claim 1, characterised in that the pressure sensor (22) is screwed into the master brake cylinder (16) in a similar way to a known brake light switch.

3. A device as claimed in claim 1 or claim 2, characterised in that the electronic evaluation circuit (23) contains screening and/or filtering means for suppressing transient variables and other non-periodic disturbance variables.

## Revendications

1. Dispositif de signalisation de l'usure des garnitures d'un frein actionné hydrauliquement pour véhicules automobiles, dans lequel des élévations mécaniques (19, 20), résistantes à l'usure par comparaison avec les garnitures de freins (15), disposées sur la partie tournante (11) ainsi que sur la partie fixe (14) du frein, et des contre-surfaces qui leur sont associées viennent s'appuyer périodiquement les unes contre les autres lors du dépassement de l'usure maximale admise pour les garnitures, ce qui provoque dans le circuit hydraulique une pulsation rythmique proportionnelle à la vitesse de la partie tournante (11) du frein, caractérisé en ce qu'il est disposé, à l'intérieur du circuit hydraulique, notamment directement sur le maître-cylindre de frein (16), un capteur de pression (22) dont les signaux de sortie électriques sont amenés à un circuit d'évaluation électronique (23) qui émet un signal d'avertissement optique et/ou acoustique lors de l'apparition de variations périodiques de pression.

2. Dispositif selon la revendication 1, caractérisé en ce que le capteur de pression (22) est vissé sur le maître-cylindre de frein (16), tout comme un contacteur connu de feux de stop.

3. Dispositif selon la revendication 1, ou 2, caractérisé en ce que le circuit d évaluation électronique (23) comporte des éléments de tamisage et/ou de filtrage pour supprimer les phénomènes transitoires et autres grandeurs perturbatrices non périodiques.

Fig.1

Fig.2